Europäisches Patentamt

European Patent Office

Office européen des brevets

(19)

(11) **EP 0 472 865 B1**

(12) **EUROPÄISCHE PATENTSCHRIFT**

(45) Veröffentlichungstag und Bekanntmachung des Hinweises auf die Patenterteilung:
**31.01.1996 Patentblatt 1996/05**

(51) Int Cl.⁶: **H04B 1/16**

(21) Anmeldenummer: **91111320.7**

(22) Anmeldetag: **08.07.1991**

(54) **UKW-Autoradio**

FM car radio

Autoradio M.F.

(84) Benannte Vertragsstaaten:
**AT CH DE ES FR GB IT LI SE**

(30) Priorität: **30.08.1990 DE 4027399**

(43) Veröffentlichungstag der Anmeldung:
**04.03.1992 Patentblatt 1992/10**

(73) Patentinhaber: **Blaupunkt-Werke GmbH
D-31132 Hildesheim (DE)**

(72) Erfinder: **Kässer, Jürgen, Dr.
W-3201 Diekholzen (DE)**

(56) Entgegenhaltungen:
**EP-A- 0 284 101**     **EP-A- 0 335 141**
**DE-A- 3 126 224**     **US-A- 4 914 715**

**Beschreibung**

Gegenstand des Schutzrechts ist ein neues UKW-Autoradio mit einem Stereo-Decoder und einem Störungsdetektor. Es ist bekannt, daß der Empfang eines UKW-Senders mit einem Autoradio durch zeitweiligen Mehrwegeempfang des Senders während einer Fahrt beeinträchtigt sein kann. Ein Mehrwegeempfang läßt sich nach DE 31 26 224 A1 durch Entnahme eines innerhalb der ZF-Bandbreite, aber oberhalb des Stereo-Multiplex-Signals liegenden Störsignals nachweisen. Überschreitet dieses Störsignal einen Schwellwert, dann läßt sich z. B. in einem modernen Autoradio die Abstimmung auf eine andere, alternative Trägerfrequenz einleiten.

Aus der EP 0 284 101 A1 ist ein FM-Stereoempfänger bekanntgeworden, bei dem ein Detektor zum Erkennen von Mehrwege-Störsignalen enthalten ist. Werden solche Signale erkannt, so wird im Rundfunkempfänger auf einen anderen Empfangsmodus umgeschaltet, um die Wirkung dieser Störsignale zu reduzieren. Die Störsignalerkennung wird dabei durch Auswertung eines über einen Hochpaß gefilterten Signals bewirkt.

Auf eine Störung wird in dem bekannten Autoradio anhand einer Eigenart des Zwischenfrequenzsignals geschlossen. Der Erfindung lag dagegen die Aufgabe zugrunde, nach einer Lösung zur Erkennung der Störung in dem über den Lautsprecher wiederzugebenden NF-Signal zu suchen.

Die Lösung gemäß der Erfindung ist durch die Merkmale des Anspruchs 1 gekennzeichnet. Weiterbildungen des Kerngedankens der Erfindung sind durch die Merkmale der Unteransprüche umrissen.

Anhand der Zeichnung werden zwei Ausführungsbeispiele der Erfindung näher erläutert. In der Zeichnung sind in

Figur 1  ein Blockschaltbild eines Autoradios,
Figur 2  ein erstes Ausführungsbeispiel,
Figur 3  ein zweites Ausführungsbeispiel der erfindungsgemäßen Erkennungsschaltung in einem detaillierteren Blockschaltbild,
     dargestellt.

Über die Autoantenne 1 wird eine Trägerfrequenz des mit dem Tuner 2 eingestellten Rundfunkprogramms empfangen. Die Abstimmung des Tuners 2 läßt sich mit einer Bedieneinheit 3 verändern, die eine Sendersuchlauf-Steuerung 4 für die Wahl alternativer Trägerfrequenzen umfaßt. Diese Steuerung wird hier nicht näher erläutert, da verschiedene Lösungen dafür bekannt sind.

Der Tuner 2 umfaßt einen FM-Demodulator 5, an dessen Ausgang das niederfrequente MPX-Signal $U_{MPX}$, die Modulation der empfangenen Trägerfrequenz, abgreifbar ist und wird über den Stereo-Decoder 6 und diesem nachgeschaltete Leistungsverstärker 7 und 8 über die Lautsprecher 9 und 10 zu Gehör gebracht.

In dem Signal $U_{MPX}$ ist bereits das Summensignal $U_{L+R}$ enthalten. In der Eingangsschaltung des Stereo-Decoders 6 wird zusätzlich das Differenzsignal $U_{L-R}$ für die stereophone Wiedergabe des eingestellten Programms zurückgewonnen. Dazu dient in bekannter Weise eine auf den Pilotton von 19 kHz abgestimmte PLL-Stufe 11 und eine Frequenzverdopplerschaltung 12, die einen 38-kHz-Hilfsträger liefert, der in einem Multiplizierer 13 mit dem Signal $U_{MPX}$ multipliziert wird. An dem Ausgang des Multiplizierers ist das Differenzsignal $U_{L-R}$ abnehmbar. Die erfindungsgemäße Erkennungsschaltung ist an den Stereo-Decoder angeschlossen und ihr Ausgang ist mit der Bedieneinheit verbunden.

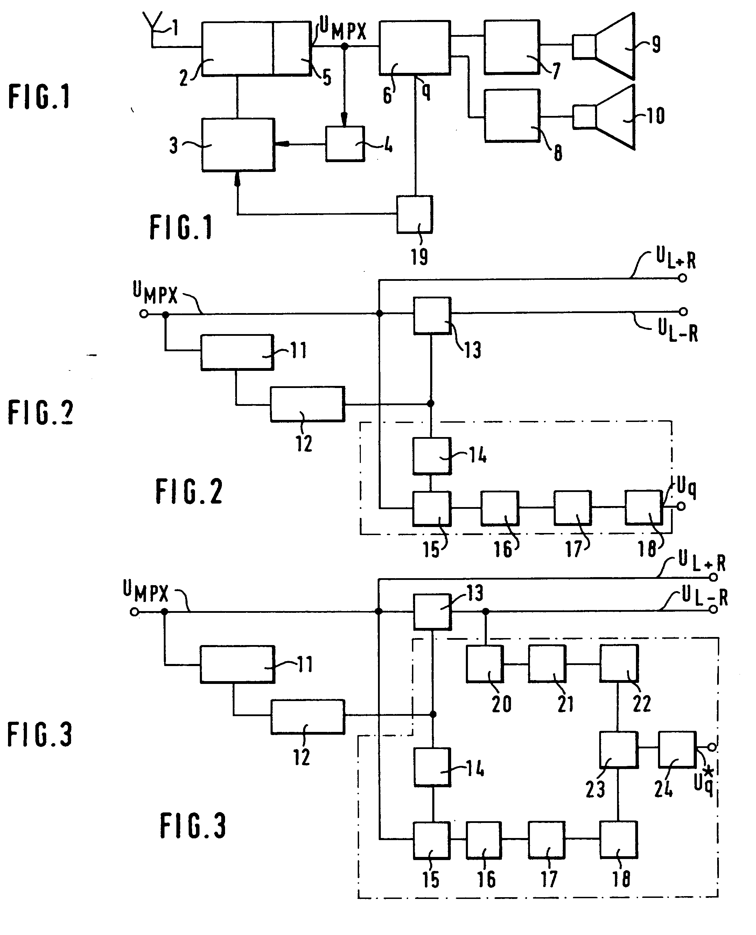

Wie Figur 2 zeigt, wird der Erkennungsschaltung einerseits das Signal $U_{MPX}$ zugeführt, andererseits ist sie an den Ausgang der Frequenzverdopplerschaltung 12 im Stereodecoder angeschlossen. In der Erkennungsschaltung wird das Signal $U_{MPX}$ in einer Multipliziererstufe 15 mit dem 38-kHz-Hilfsträger multipliziert, nachdem dieser eine 90°-Phasenschieber 14 durchlaufen hat. Das Ausgangssignal der Multipliziererstufe 15 wird in einem Tiefpaß 16 gefiltert, dessen obere Grenzfrequenz etwa 3 kHz beträgt. Danach wird das tiefpaßgefilterte Signal in einer Gleichrichterstufe 17 gleichgerichtet und über einen weiteren Tiefpaß 18 geleitet.

Im Stereo-Decoder wird aus diesem Signal u. a. das gestörte Differenzsignal

$$U_{L-R(St)} = (U_{L-R} + \Delta U_{L-R}) \cos 2\gamma - \Delta \hat{U}_{L-R} \sin 2\gamma$$

$$= U_{L-R} - [U_{L-R} (1 - \cos 2\gamma) - \Delta U_{L-R} \cos 2\gamma + \Delta \hat{U}_{L-R} \sin 2\gamma]$$

gewonnen.

Der Anteil des MPX-Signals, der in Quadratur zum unterdrückten Trägerliegt, liefert ein der Störung proportionales Signal

$$U_q = (U_{L-R} + \Delta U_{L-R}) \sin 2\gamma + \Delta \hat{U}_{L-R} \cos 2\gamma.$$

Da die Kanaltrennung für höhere Frequenzen auch bei guten Eingangssignalen schlechter ist, empfiehlt es sich, dieses Signal mit einem Tiefpaß zu filtern (Frequenzobergrenze ungefähr 3 kHz) gleichzurichten und über einige Zeit zu mitteln, um Schwankungen des Differenzsignales auszugleichen.

In einer schneller ansprechenden Erkennungsschaltung, die in Figur 3 dargestellt ist, wird auch das Differenzsignal

$U_{L-R(St)}$ über einen Tiefpaß 20, einer Gleichrichterstufe 21 und einen Tiefpaß 22 geleitet und in einem Quotientenbildner 23 mit dem der Schaltung gemäß Figur 2 entnehmbaren Ausgangssignal zusammengeführt. Das Ausgangssignal des Quotientenbildners 23 wird erneut tiefpaßgefiltert und vermag bei ausreichender Größe $U_q^*$ über die Schwellwertstufe 19 die Neueinstellung des Tuners einzuleiten.

Das Ausgangssignal des Tiefpasses 18 stellt ein Maß für die Qualität der wiederzugebenden Niederfrequenz dar. In einer Schwellwertstufe 19 wird das Ausgangssignal bewertet, und das gegebenenfalls vorhandene Ausgangssignal der Schwellwertstufe 19 leitet eine Neueinstellung des Tuner auf eine andere, alternative Frequenz des gewählten Programms oder die Umschaltung auf ein anderes Programm ein.

Für die Erkennungsschaltung gilt folgende Überlegung. Das Signal $U_{MPX}$ eines UKW-Senders hat die Form

$$U_{MPX} = U_{L+R} + U_P \sin W_P t + U_{L-R} \sin 2W_P t + U_{RDS}$$

wobei

$U_{L+R}$     die Amplitude des Stereo-Summensignals

$$\frac{W_P}{2\pi}$$

        die Frequenz des Stereo-Pilottons (19 kHz)

$U_P$     die Amplitude des Pilottons

$U_{L-R}$     die Amplitude des Differenzsignals

$U_{RDS}$     die Amplitude des 57-kHz-Hilfsträgers, mit dem u. a. die alternativen Trägerfrequenzen übertragen werden

Im Fall von Mehrwege-Empfang, aber auch von anderen Störungen, treten Verzerrungen auf, die zu folgendem empfangenen Signal führen:

$$U_{MPX(St)} = U_{MPX} + U_{St}$$

$$= U_{L+R} + \Delta U_{L+R} + (U_P + \Delta U_P) \sin (W_P t + \gamma)$$

$$+ (U_{L-R} + \Delta U_{L-R}) \sin 2W_P t + \Delta \hat{U}_{L-R} \cos 2W_P t$$

$$+ U_{RDS} + \Delta U_{RDS}$$

$\gamma$     ist dabei die durch die Störung hervorgerufene Phasenänderung des Pilottons und

$\Delta \hat{U}_{L-R}$     ein Störanteil im Differenzsignal, der in Quadratur zum unterdrückten Träger liegt.

**Patentansprüche**

1. UKW-Autoradio mit einem Stereo-Decoder und einem Störungsdetektor,
   dadurch gekennzeichnet,
   daß der Störungsdetektor einen in Quadratur zum Differenz signal für die stereophone Wiedergabe ($U_{L-R}$) liegenden Signalanteil feststellt und zur Störungsanzeige auswertet.

2. UKW-Autoradio nach Anspruch 1,
   dadurch gekennzeichnet,
   daß das in einem Phasenschieber (14) um 90° in der Phase gedrehte Ausgangssignal des Frequenzverdopplers (12) im Stereo-Decoder (6) und das Ausgangssignal des FM-Demodulators (5) im Tuner (2) in einer Multiplizierstufe (15) miteinander multipliziert werden und daß dessen Ausgangssignal nach Tiefpaßfilterung (16) und Gleichrichtung (17) als Störanzeigesignal $U_q$ dient.

3. UKW-Autoradio nach Anspruch 2,
   dadurch gekennzeichnet,
   daß das Differenzsignal $U_{L-R(St)}$ nach Tiefpaßfilterung und Gleichrichtung zusammen mit dem tiefpaßgefilterten und gleichgerichteten Ausgangssignal des Multiplizierers (15) einem Quotientenbildner (23) zugeführt wird und dessen Ausgangssignal nach Tiefpaßfilterung (24) als Störanzeigesignal $U_q^*$ dient.

**4.** UKW-Autoradio nach Anspruch 2 oder 3,
dadurch gekennzeichnet,
daß die Störanzeigesignale in einer Schwellwertstufe (19) bewertet werden.

**Claims**

**1.** FM car radio with a stereodecoder and an interference detector, characterized in that the interference detector detects a signal component which is at a phase angle of 90° with respect to the difference signal for the stereophonic playback ($U_{L-R}$) and evaluates it for the purposes of fault display.

**2.** FM car radio according to Claim 1, characterized in that the output signal, which is turned through 90° in phase in a phase shifter (14) of the frequency doubler (12) in the stereodecoder (6) and the output signal of the FM demodulator (5) in the tuner (2) are multiplied by one another in a multiplier stage (15), and in that the output signal of the said multiplier stage (15) serves, after low-pass filtering (16) and rectification (17), as a fault display signal $U_q$.

**3.** FM car radio according to Claim 2, characterized in that the difference signal $U_{L-R(St)}$ is fed, together with the low-pass filtered and rectified output signal of the multiplier (15) to a quotient former (23) after low-pass filtering and rectification and the output signal of the said quotient former (23) serves, after low-pass filtering (24), as a fault display signal $U_q^*$.

**4.** FM car radio according to Claim 2 or 3, characterized in that the fault display signals are evaluated in a threshold value stage (19).

**Revendications**

**1.** Autoradio F.M. à décodeur stéréo et détecteur de parasite,
caractérisé en ce que,
le détecteur de parasite détermine une composante de signal en quadrature avec le signal de différence pour la reproduction stéréophonique ($U_{L-R(St)}$) et l'exploite pour l'affichage du parasite.

**2.** Autoradio F.M. selon la revendication 1, caractérisé en ce que,
le signal de sortie du doubleur de fréquence (12) dont le décodeur stéréo (6), est déphasé dans le déphaseur (14) de 90° et un signal de sortie du démodulateur F.M. (15) dans le syntoniseur (12) sont multipliés l'un avec l'autre dans l'étage multiplicateur (15) dont le signal de sortie traverse un filtre passe-bas (16) et un redresseur (17) pour servir de signal d'affichage de parasite $U_q$.

**3.** Autoradio F.M. selon la revendication 2, caractérisé en ce que,
le signal de différence $U_{L-R(St)}$ après filtrage par un filtre passe-bas et redressement ainsi que le signal de sortie ayant traversé un filtre passe-bas et ayant été redressés du multiplicateur (15) sont appliqués à un générateur de quotient (23) dont le signal de sortie constitue, après un filtrage passe-bas (24) le signal d'affichage de parasite $U_q^*$.

**4.** Autoradio F.M. selon la revendication 2 ou 3,
caractérisé en ce que,
les signaux d'affichage parasites sont exploités dans un étage à seuil (19).

FIG.1

FIG.1

FIG.2

FIG.2

FIG.3

FIG.3